# EUROPÄISCHE PATENTANMELDUNG

(11) **EP 2 400 623 A2**
(43) Veröffentlichungstag der Anmeldung: **28.12.2011**
(21) Anmeldenummer: 11167765.4
(22) Anmeldetag: 26.05.2011
(51) Int. Cl.: H02J 7/00

(54) **Verfahren und Vorrichtung zur automatischen Spannungsstützung batteriebetriebener Geräte**

(30) Priorität: 04.06.2010 DE 102010022774
(71) Anmelder: Techem Energy Services GmbH, 65760 Eschborn (DE)
(72) Erfinder: Heisser, Lothar, 55299 Nackenheim (DE); Klee, Helmut, 61118 Bad Vilbel (DE); Reus, Jürgen, 63579 Freigericht (DE)
(74) Vertreter: KEIL & SCHAAFHAUSEN Patentanwälte

(57) **Zusammenfassung**

Es werden Verfahren und eine Vorrichtung zur automatischen Spannungsstützung eines batteriebetriebenen Geräts, insbesondere eines kombinierten Erfassungs- und Kommunikationsgeräts in einem Gebäude-Funknetz, mit einem zeitabhängig unterschiedlichen Strombedarf beschrieben, der durch verschiedene Stromverbraucher (2, 3) in dem Gerät hervorgerufen wird. Die Spannungs- und Stromversorgung wird an einem Spannungsversorgungsanschluss (5) des Geräts durch eine erste Batterie (B1) zur Verfügung gestellt. Eine zweite Batterie (B2) wird über einen der zweiten Batterie (B2) zugeordneten zweiten Spannungsregler (V2) an dem Spannungsversorgungsanschluss (5) des Gerätes parallel zugeschaltet, wenn die an dem Spannungsversorgungsanschluss (5) des Geräts anliegende Spannung (U3) einen vorgegebenen Schwellwert (Uv2n) unterschreitet. Um die Notwendigkeit von Wartungen zu reduzieren werden als erste Batterie (B1) eine Niedrigstrom-Batterie mit hoher Energiedichte und als zweite Batterie (B2) eine Hochstrom-Batterie mit verhältnismäßig niedriger Energiedichte verwendet. (Fig. 5)

## Beschreibung

Die Erfindung betrifft ein Verfahren und eine Vorrichtung zur automatischen Spannungsstützung eines batteriebetriebenen Geräts gemäß dem Oberbegriff des Anspruchs 1, insbesondere eines kombinierten Erfassungs- und Kommunikationsgeräts in einem Gebäude-Funknetz, mit einem zeitabhängig unterschiedlichen Strombedarf, der durch verschiedene Stromverbraucher in dem Gerät hervorgerufen wird. Im Sinne dieser Erfindung wird unter einem batteriebetriebenen Gerät ein Gerät verstanden, das mit herkömmlichen Batterien oder wiederaufladbaren Akkumulatoren betrieben wird. Unter Batterie als netzunabhängige Energieversorgung kann im Sinne dieser Erfindung daher sowohl eine herkömmliche Batterie als auch ein Akkumulator verstanden werden.

Typische Erfassungs- und Kommunikationsgeräte, auf welche sich die Erfindung bevorzugt bezieht, sind Messgeräte und/oder Datensammler/Router, die insbesondere im Rahmen einer Verbrauchswerterfassung eingesetzt werden, bei der Messgeräte mittels Sensoren für einen Verbrauch typische Messwerte erfassen und diese in einen Funk-Kommunikationsnetz an Datensammler übertragen. Ein weiterer bevorzugter Anwendungsfall der vorliegenden Erfindung sind Meldegeräte, wie Alarmgeber von Einbruchsmeldeanlagen aber auch Brand- oder Rauchwarnmelder, die Alarmmeldungen an Datensammler oder sonstige Erfassungsgeräte, bspw. eine Alarmzentrale, aussenden. Aus den Datensammlern können Verbrauchsdaten bspw. zur Erstellung einer Verbrauchsabrechnung ausgelesen werden. Eine typische Anwendung sind beispielsweise Heizkostenverteiler. Die in den Datensammlern gesammelten Daten können zusätzlich auch für Mehrwertdienste eingesetzt werden, was unter dem Schlagwort "smart metering" bekannt ist. Für derartige Anwendungen können die Daten insbesondere auch über das Funk-Kommunikationsnetz übertragen werden.

Die Gebäude-Funknetze sind häufig so ausgelegt, dass die die Verbrauchswerte sendenden Erfassungs- und Kommunikationsgeräte die Verbrauchswerte in unioder bidirektionaler Kommunikation an innerhalb ihrer Funkreichweite angeordnete Datensammler übertragen, die entweder als zentrale Sammelstelle für alle Verbrauchswerte dienen oder als Router die in ihnen gespeicherten Mess- oder Verbrauchswerte an weitere Auswerteeinheiten, beispielsweise einen zentralen Datensammler, weiterleiten.

Derartige kombinierte Erfassungs- und Kommunikationsgeräte haben insbesondere für die Aussendung der Datentelegramme, d.h. den Kommunikationsbetrieb, einen relativ kurzzeitigen Bedarf an hochenergetischen Strompulsen zum Speisen der Hochfrequenzsender und/oder Hochfrequenzempfänger. Dagegen haben diese Geräte in der überwiegenden Zeit, also relativ lange, im Ruhebetrieb oder auch während der Messtätigkeit eine im Vergleich zu der Amplitude der Strompulse zur Versorgung der Kommunikationseinrichtungen niedrige Stromgrundlast, welche die Mess-, Erfassungs- oder Steuersysteme des batteriebetriebenen Geräts mit Energie versorgt. Da die Übertragung der erfassten Daten in vorgegebenen Zeitabständen erfolgt, die Erfassung der Messwerte und/oder die Steuerung der Messwerterfassung jedoch kontinuierlich oder auch in anderen, meist kürzeren Zeitabständen erfolgt, haben derartige Erfassungs- und Kommunikationsgeräte einen durch die verschiedenen Stromverbraucher in dem Gerät hervorgerufenen, zeitabhängig unterschiedlichen Strombedarf. Stromverbraucher können also insbesondere ein Mikroprozessor zur Gerätesteuerung, beispielsweise Messwerterfassung und -verarbeitung und/oder Kommunikationssteuerung, sowie Sender und/oder Empfänger zur Kommunikation sein.

Auch wenn die kombinierten Erfassungs- und Kommunikationsgeräte, die in einem Gebäude-Funknetz zusammengeschlossen sind, eine bevorzugte Anwendung der vorliegenden Erfindung darstellen, ist die Erfindung nicht grundsätzlich auf eine Verwendung in derartigen Geräten beschränkt, sondern eignet sich für alle batteriebetriebenen (d.h. im Sinne der Erfindung batterie- und/oder akkumulatorbetriebenen) Geräte mit zeitabhängig unterschiedlichem Strombedarf, der vorzugsweise durch verschiedene Stromverbraucher in dem Gerät hervorgerufen wird. Diese Stromverbraucher können verschiedene gerätetechnische Einheiten oder unterschiedliche Betriebsmodi ein und derselben Geräteeinheit sein, beispielsweise rechenarme und rechenintensive Zeiten eines Mikroprozessors.

Üblicherweise wird die Spannungs- und Stromversorgung an einem Spannungsversorgungsanschluss des Geräts durch eine Batterie zur Verfügung gestellt, die wie der Spannungsversorgungsanschluss selbst vorzugsweise in das Gerät integriert ist. Diese eine Batterie muss dann die gesamte Spannungs- und Stromversorgung, und damit auch den zeitabhängig unterschiedlichen Strombedarf, abdecken.

Als Batterietypen gibt es grundsätzlich sogenannte "Niedrigstrom-Batterien", die eine vergleichsweise niedrige Dauerstromlast, typischerweise im µA-Bereich, über einen langen Zeitraum bei konstanter Batteriespannung zur Verfügung stellen können. Für Erfassungs- und Kommunikationsgeräte in der Verbrauchsdatenerfassung, beispielsweise Heizkostenverteiler mit einer definierten und auf die Lebensdauer der Batterie abgestimmten Kommunikationsleistung, wird bei einem typischen Betrieb eine Lebenszeit zwischen 10 bis 12 Jahren erreicht, während denen die Nennspannung der Batterie zuverlässig zur Verfügung gestellt werden kann. Aufgrund des durch die Niedrigstrom-Batterie typischerweise gelieferten niedrigen Dauerstroms wird dieser Batterietyp auch als Niederstrom-Batterie bezeichnet.

Ein anderer Batterietyp ist die sogenannte Hochstrom-Batterie, die für kurzzeitig auftretende, im Vergleich zu einem niedrigen Dauerstrom hohe Stromlasten konzipiert ist. Die Stromlasten können im mA-Bereich bis hin zum A-Bereich liegen. Wird eine solche Batterie mit einer niedrigen Dauerstromlast im µA-Bereich betrieben, hat diese Hochstrom-Batterie eine im Vergleich zur Niedrigstrom-Batterie ähnlicher Baugröße wesentlich kürzere Lebenszeit, in der sie eine hohe Batterie-spannung zuverlässig zur Verfügung stellen kann. Die Lebenszeit liegt dann häufig nicht über 5 bis 7 Jahren. Der Grund dafür ist eine wesentlich höhere Selbstentladung.

Bei in einem Gebäude-Funknetz miteinander vernetzten Erfassungs- und Kommunikationsgeräten, beispielsweise Datensammlern, welche an Erfassungsgeräten erfasste Daten sammeln (erfassen) und an andere Datensammler weiterleiten, sind einerseits zum Erreichen der erforderlichen Funkreichweiten der Kommunikationseinrichtungen (Sender und/oder Empfänger) im Pulsbetrieb hohe Stromlasten notwendig. Andererseits treten bei den restlichen Aktivitäten des Geräts im Vergleich nur niedrige Ströme oder Strompulse mit im Vergleich niedrigerer Stromlast/Amplitude auf, die durch die Batterie zur Verfügung gestellt werden müssen. Daher ist es schwierig, einen optimal geeigneten Batterietyp für die Versorgung derartiger Geräte auszuwählen. Im Allgemeinen sind Batterietypen aufgrund ihrer Bauform und des chemischen Systems nämlich entweder für hohe oder für niedrige Stromlasten konzipiert (Niedrigstrom-Batterie oder Hochstrom-Batterie) und können daher den Strombedarf nur für einen kleinen Dynamikbereich zufriedenstellend bei einer guten Energieausbeute und Lebenszeit abdecken.

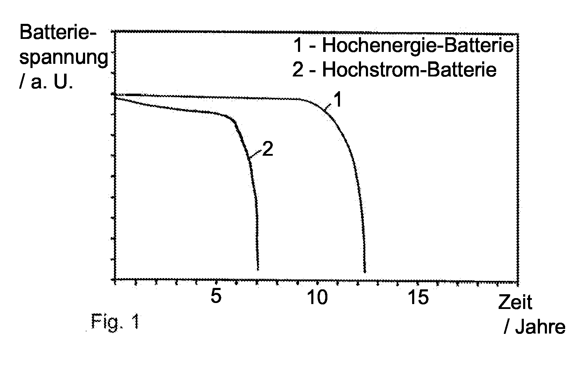

Die Lebenszeiten einer typischen Niedrigstrom-Batterie 1 und einer Hochstrom-Batterie 2 ähnlicher Baugröße sind in Fig. 1 in einer typischen Relation als Batterie-Spannungskennlinie in beliebigen Einheiten (arbitrary units, a.u.) über der Zeit dargestellt, wenn beide Batterien im Wesentlichen mit einem niedrigen Dauerstrom im µA-Bereich betrieben werden. Die Zeit ist beispielhaft in der Einheit "Jahre" aufgetragen.

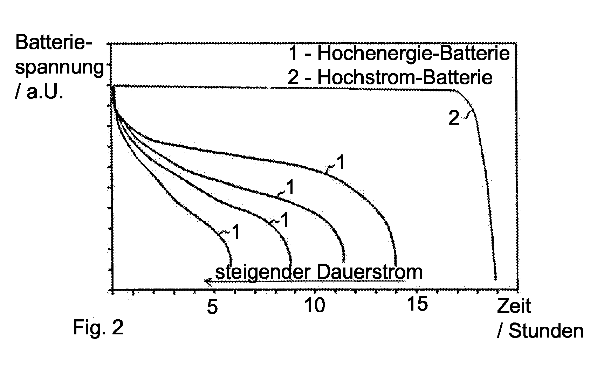

Die hochenergetische Batterie 1, wie bspw. eine Lithium-Thionylchlorid-Batterie (Li-SOCl₂), ist dagegen bezüglich ihres Maximalstroms, insbesondere bei fortgeschrittenem Entladungsgrad der Batterie, deutlich beschränkt. Dies ist in Fig. 2 dargestellt, welche eine Batterie-Spannungskennlinie über die Zeit, diesmal in der Einheit "Stunde" aufgetragen, mit einem hohen Dauerstrom im A-Bereich darstellt. Die Hochstrom-Batterie 2 stellt während ihrer Lebensdauer dagegen einen hohen Dauerstrom bei einer nahezu konstanten Batteriespannung zur Verfügung, bis die Batterie entladen ist. Niedrigstrom-Batterien 1 zeigen bei einer hohen Strombelastung im A-Bereich dagegen einen schnell auftretenden Abfall der Batteriespannung, der sich bei anhaltender Stromlast unter einer Plateaubildung verlangsamt, bis die Batterie vollständig entleert ist. Mit steigendem Dauerstrom ist, wie in Fig. 2 anhand verschiedener Kennlinien für dieselbe Niedrigstrom-Batterie 1 bei unterschiedlicher Stromlast schematisch dargestellt, die Plateaubildung immer weniger stark ausgebildet, was zu einer erheblichen Verkürzung der Lebenszeit bei steigender Dauerstrombelastung führt. Diese Abhängigkeit vom Dauerstrom zeigt sich bei der Hochstrom-Batterie 2 nicht in demselben Maße, so dass eine derartige Abhängigkeit in Fig. 2 nicht dargestellt ist.

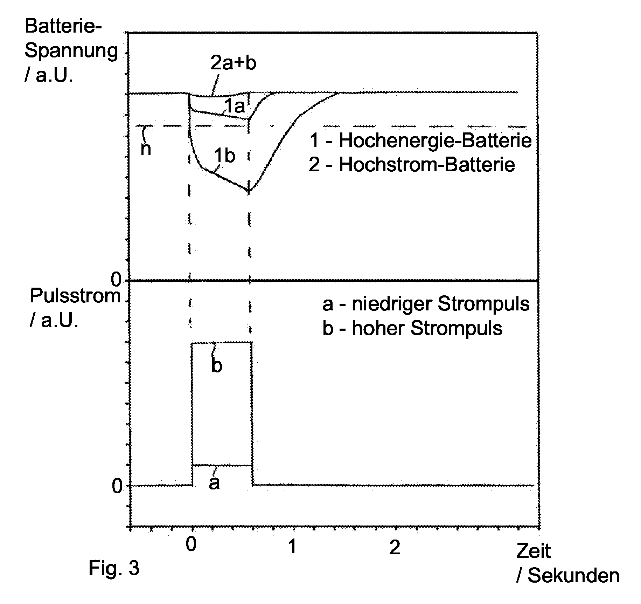

Fig. 3 zeigt das Verhalten der Batterie-Spannung im Pulsbetrieb mit Strompulsen im mittleren Strombereich (mA-Bereich) über die Zeit, die in einer Einheit "Sekunde" dargestellt ist. Der untere Teil des Diagramms zeigt den fließenden Pulsstrom in beliebigen Einheiten (a.u. arbitrary units) für einen Strompuls a mit niedriger und einen Strompuls b mit im Vergleich hoher Amplitude, jeweils im mA-Bereich. Unmittelbar darüber und auf derselben Zeitachse ist die Kennlinie der Batterie-spannung aufgetragen. Vor Anlegen des Strompulses, d.h. einem Pulsstrom von Null, stellen sowohl die Niedrigstrom-Batterie 1 als auch die

Hochstrom-Batterie 2 eine konstante Batteriespannung zur Verfügung. Bei Einschalten des Strompulses, beispielsweise durch Aktivierung einer Sende- oder Empfangsschaltung einer Kommunikationseinrichtung in dem batteriebetriebenen Gerät, zeigt die Hochstrom-Batterie 2 lediglich einen minimalen Spannungseinbruch. Sie stellt die Stromlast im mA-Bereich sowohl für niedrige Strompulse a als auch für hohe Strompulse b mit einer kaum merkbaren Spannungsabsenkung zur Verfügung, wobei in dem dargestellten Maßstab kein Unterschied zwischen niedrigen und hohen Strompulse a, b festgestellt werden kann.

Die Niedrigstrom-Batterie 1 reagiert bei Aktivierung eines niedrigen Strompulses a im mA-Bereich mit einem signifikanten Spannungsabfall beim Einschalten des Strompulses, der anschließend während der Dauer des Strompulses zu einer Plateaubildung mit nur noch geringerem weiteren Spannungsabfall führt. Bei einer Deaktivierung des Strompulses erholt sich die Niedrigstrom-Batterie schnell, so dass nach kurzer Zeit die ursprüngliche Batteriespannung wieder erreicht wird. Dies ist in dem Spannungsverlauf 1a dargestellt.

Der Spannungsverlauf 1b stellt sich bei Aktivierung eines hohen Strompulses b ein. Bei diesem Strompuls b zeigt die Batterie-Spannungskennlinie der Niedrigstrom-Batterie 1 einen deutlichen Spannungsabfall, der - je nach Entladungsgrad der Batterie - durchaus zu einer Batteriespannung im Bereich der Hälfte der Ausgangsspannung führt. Bei der hohen Stromlast während des Strompulses b ist die Plateaubildung weniger stark ausgebildet als im Spannungsverlauf 1a, so dass die Batteriespannung während des anliegenden Strompulses deutlich weiter sinkt. Nach Ausschalten des Strompulses erholt sich die Niedrigstrom-Batterie 1 auch wieder und kehrt zu ihrem Ausgangsspannungs-Niveau zurück, benötigt hierfür allerdings deutlich mehr Zeit als im Falle eines niedrigen Strompulses a.

Ein derartiges Verhalten der Spannungskennlinie der Batteriespannung der Niedrigstrom-Batterie ist unkritisch, solange der dargestellte Spannungsabfall nicht unter eine Nennspannung n fällt, die innerhalb des Geräts für interne Verbraucher, beispielsweise einen Mikroprozessor, zur Verfügung gestellt werden muss. Dies ist in Fig. 3 für die Spannungskennlinie 1a noch erfüllt. Die Spannungskennlinie 1 b unterschreitet jedoch dieses Nennspannungsniveau n mit Einschalten des hohen Strompulses b für eine gewisse Zeit. Dies würde bei einem von der Niedrigstrom-Batterie 1 mitversorgten Mikroprozessor zum Absturz führen, so dass die Niedrigstrom-Batterie 1 bei dem in Fig. 3 dargestellten Entladungszustand getauscht werden müsste. Eine frische Batterie hätte beispielsweise bei einem hohen Strompuls b noch den Kennlinienverlauf 1a, so dass die durch die Niedrigstrom-Batterie 1 zur Verfügung gestellte Energie ausreichen würde.

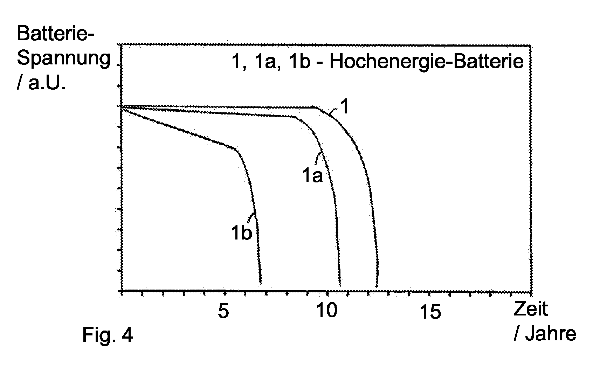

In Fig. 4 sind schließlich die Lebenszeiten einer Niedrigstrom-Batterie 1 betrieben mit ausschließlich niedrigem Dauerstrom, einer Niedrigstrom-Batterie 1a betrieben mit niedrigem Dauerstrom und niedrigen Strompulsen und einer Niedrigstrom-Batterie 1b betrieben mit niedrigem Dauerstrom und hohen Strompulsen schematisch dargestellt.

Um bei Niedrigstrom-Batterien 1 eine längere Lebenszeit zu erreichen, als sie in Fig. 4 für die Spannungskennlinie 1b dargestellt ist, ist bereits bekannt, eine Zusatzladung in einer Pufferschaltung, die beispielsweise aus einem großen Kondensator, Supercaps- oder Hybridlayer-Kondensatoren besteht, zwischen zu speichern, um bei hohen Strompulsen mit einer vergleichsweise hohen Stromamplitude zeitlich begrenzt zusätzliche Ladung zur Verfügung stellen zu können, ohne die Niedrigstrom-Batterie 1 über Gebühr zu belasten.

Durch eine derartige Maßnahme wird der in Fig. 3 dargestellte Spannungseinbruch der Spannungskennlinien 1a, 1b bei gleicher Pulsamplitude verringert. Es hat sich allerdings herausgestellt, dass die durch eine derartige Pufferschaltung zur Verfügung gestellte Energie nicht immer ausreicht, um die Batterie weniger stark zu belasten und die gewünschte Lebensdauer zu erreichen. Bei einem Verbrauchswert-Erfassungssystem sollte die Lebensdauer der eingesetzten Batterie zur Strom- und Spannungsversorgung des Gerätes zuverlässig mindestens 10 Jahre betragen, um häufige und kostenintensive Servicefälle zu vermeiden.

Andererseits werden in einem Verbrauchserfassungssystem erfasste Messwerte in zunehmendem Maße auch verwendet, um zusätzliche Geräte zu steuern. So ist es beispielsweise aus der DE 10 2005 012 597 A1 bekannt, die Temperaturmesswerte eines Heizkostenverteilers zu verwenden, um den Gesamtwärmebedarf eines Gebäudes zu ermitteln und die Vorlauftemperatur entsprechend zu regeln. Durch diese auch als "smart metering" bezeichnete Zusatzleistung erhöht sich der Kommunikationsbedarf der die Messwerte weiterleitenden Datensammler erheblich und führt dazu, dass der gesamte Energiebedarf durch die zusätzliche Pufferschaltung nicht mehr abgedeckt werden kann, insbesondere wenn die erforderliche Ladung eines Strompulses als Intergral des Stroms über die Zeit sehr groß ist, weil die nutzbare Energie bei der Verwendung einer Pufferschaltung für Schaltungsteile mit großem Stromverbrauch begrenzt ist. Auch Supercaps oder Hybrid-Layer-Kondensatoren haben eingeschränkte Lade- und Entladezyklen, eingeschränkte Kapazitätswerte, große Leckströme und eine eingeschränkte Temperaturstressverträglichkeit. Aufgrund ihrer Kapazität können auch Sie nur zeitlich begrenzt einen hohen Strom liefern, so dass eine zuverlässig lange Lebensdauer der zugrundeliegenden Batterie nicht gewährleistet werden kann. Daher lässt sich eine optimale Lösung für die am Markt befindlichen Niederstrombatterien mit hoher Energiedichte, die einen hohen Innenwiderstand und eine niedrige Selbstentladerate besitzen, und Hochstrom-Batterien mit verhältnismäßig niedriger Energiedichte, die ein niedrigen Innenwiderstand und eine höhere Selbstentladerate besitzen, nicht erreichen.

Es wäre ferner denkbar, zusätzlich zu der Niedrigstrom-Batterie, welche die Energieversorgung der Niederstrom-Einrichtungen des Geräts, wie insbesondere eines in dem Gerät vorhandenen Mikroprozessors zu dessen Steuerung, im Dauerstrombetrieb sichert, eine Hochstrom-Batterie an den Schaltungseinrichtungen des Geräts mit großem Stromverbrauch einzusetzen oder die Stromversorgung vor dem Einschalten einer Schaltungseinrichtung mit hohem Stromverbrauch, beispielsweise einem Sender und/oder Empfänger, von der hochenergetischen Niederstrom-Batterie auf eine niederenergetische Hochstrom-Batterie umzuschalten. Eine gezielte Umschaltung oder Zuschaltung der Hochstrom-Batterie während größerer Lastphasen mit erhöhtem Strombedarf erfordert jedoch einen aufwendigen und ggf. fehleranfälligen Algorithmus in Hard- und/oder Software sowie einen zusätzlichen Energieverbrauch für die Überwachung der intensiveren Lastphasen.

Sowohl bei der Verwendung einer zusätzlichen Hochstrom-Batterie an den Schaltungsteilen mit großem Stromverbrauch als auch bei Umschaltung von der Niederstrom-Batterie auf die Hochstrom-Batterie wird, je nach Stromprofil, eine der beiden Batterien zuerst entladen sein. Dies macht jeweils einen Batteriewechsel vor Ort erforderlich, obwohl eine der Batterien noch weiterverwendet werden kann.

Ein entsprechendes Power-Management-System, allerdings nicht mit verschiedenen Batterien unterschiedlichen Typs, wird in der US 2008/0122938 A1 im Rahmen eines Kommunikationsnetzes beschrieben, in dem eine Vielzahl von Daten übertragen werden soll. Die dort als Kommunikationsteilnehmer eingesetzten Kameras weisen zwei Batterien zur Energieversorgung auf, deren Ladezustand durch Lademonitore überwacht wird. Wenn ein Lademonitor anzeigt, dass die Energie einer der beiden Batterien für das Betreiben der Kamera nicht ausreicht, werden beide Batterien parallel geschaltet, um einen höheren Strom zu ermöglichen. Ferner wird von der ersten auf die zweite Batterie umgeschaltet, wenn die erste Batterie einen zu geringen Ladezustand anzeigt. Allerdings ist das vorgeschlagene Power-Management vergleichsweise kompliziert und erfordert laufend eine aktive Überwachung des Ladezustands der aktuell zur Energieversorgung herangezogenen Batterien. Dies kostet selbst Energie für den Lademonitor und den Mikroprozessor, auf dem das Power-Management implementiert ist und die entsprechenden Rechenschritte ausgeführt werden. Außerdem sind solche Lademonitore störanfällig, so dass das vorgeschlagene Management-System einen signifikanten Wartungsbedarf aufweist.

Die US 4,908,523 beschreibt einen Funk-Pager mit einer Hauptbatterie und einer Ersatzbatterie, die allerdings nur eine geringe Kapazität aufweist und nicht in der Lage ist, die Hochstromanwendung des Funk-Pagers zu betreiben. Wenn die Betriebsspannung der Hauptbatterie unter einen vorgegebenen Schwellenwert sinkt, wird die Hochstromanwendung durch einen Schalter von der Stromversorgung getrennt und die weiteren Anwendungen, insbesondere der Mikroprozessor des Funk-Pagers, mit der Ersatzbatterie weiter betrieben, wobei gleichzeitig angezeigt wird, dass die Hauptbatterie getauscht werden soll. Haupt- und Ersatzbatterie werden also alternativ betrieben, wobei die Ersatzbatterie lediglich dafür gedacht ist, die Energieversorgung des internen Mikroprozessors bis zum Austausch der Hauptbatterie aufrecht zu erhalten und einen unkontrollierten Systemabsturz zu verhindern. Die Lebensdauer des Funk-Pagers erhöht sich nicht, so dass auch Wartungsintervalle nicht größer werden. Dieses Verfahren macht für in einem Gebäude-Netzwerk fest installierte Geräte keinen Sinn, da dort gerade die Durchführung einer Wartung aufwendig und kostenintensiv ist.

Aus der US 5,019,803 ist ein Infrarot-Alarmgeber mit einem Funksender bekannt, der durch zwei Batterien mit Energie versorgt wird. Ein Energieversorgungs-Management verbindet die zweite Batterie mit dem Detektor und dem Funksender, wenn die erste Batterie unter einen Spannungs-Schwellenwert fällt. Gleichzeitig wird angezeigt, dass beide Batterien getauscht werden sollen. Ferner wird eine Schaltung mit einem Regler vorgeschlagen, die die Energieversorgung aufrecht erhält, bis die Energie beider Batterien unter einen bestimmten Schwellenwert sinkt. Dazu wird die Energie der ersten Batterie dem Gerät an einem Einspeisepunkt eingespeist, wobei über eine Spannungsteilerregelung ein bestimmter Spannungswert vorgegeben wird. Die zweite Batterie ist über einen zweiten Spannungsteiler an den Einspeisepunkt angeschlossen, wobei der zweite Spannungsteiler nur aktiviert wird, wenn die Spannung der ersten Batterie unter ein bestimmtes Spannungsniveau sinkt. Hierdurch wird ein Umschalten von der ersten auf die zweite Batterie bewirkt, welche die erste Batterie unterstützt bzw. ersetzt, abhängig von dem Entladungsgrad der ersten Batterie. Allerdings wird auch die zweite Batterie nach Entladung der ersten Batterie schnell entladen werden, insbesondere wenn der Infrarot-Alarmgeber regelmäßig Pulse mit hohem Strom bspw. für die Kommunikation im Gebäudenetz benötigt. In diesem Fall kann die zweite Batterie lediglich eine vergleichsweise kurze Zeitspanne bis zum Batterietausch überbrücken, ohne die Wartungsintervalle selbst deutlich zu verlängern. Es wird lediglich ein Ausfall des Alarmgebers bis zu Durchführung der Wartung vermieden.

Aufgabe der vorliegenden Erfindung ist es daher, eine Möglichkeit zur automatischen Spannungsstützung eines batteriebetriebenen Geräts vorzusehen, welche einfach umsetzbar ist, keine Überwachung für die Aktivierung großer Stromverbraucher innerhalb des Geräts benötigt und den Wartungsaufwand der batteriebetriebenen Geräte reduziert, wobei Lastspitzen besonders effektiv abgefangen werden sollen.

Diese Aufgabe wird mit den Merkmalen der Ansprüche 1 oder 8 gelöst.

Bei dem gemäß Anspruch 1 erfindungsgemäß vorgeschlagenen Verfahren wird eine zweite Batterie über einen der zweiten Batterie zugeordneten (nachfolgend auch als zweiten Spannungsregler bezeichneten) Spannungsregler an dem Spannungsversorgungsanschluss des Geräts parallel zugeschaltet, wenn die an dem Spannungsversorgungsanschluss des Geräts anliegende Spannung, die von der ersten Batterie zur Verfügung gestellt wird, einen vorgebbaren Schwellwert unterschreitet. Gemäß einfachen Ausführungsformen lässt sich die Erfindung aber auch mit Spannungsreglern erreichen, die als mechanischer oder elektrischer Schalter ausgebildet sind und je nach Bedarf die jeweiligen Batterien wegoder zuschalten.

Vorzugsweise regelt der der zweiten Batterie zugeordnete (zweite) Spannungsregler dann, d.h. bei Unterschreiten dieses vorgegebenen Schwellwerts, die Versorgungsspannung auf genau diesen oder einen anderen vorgegebenen Schwellwert. In diesem Fall stellt das "Zuschalten" der zweiten Batterie eigentlich ein "Zuregeln" dar, weil der zweite Spannungsregler entsprechend dem zusätzlichen Energiebedarf dem Spannungsversorgungsanschluss des Geräts die Energie der zweiten Batterie zuführt, soweit diese benötigt wird, um die dort gewünschte Spannung aufrecht zu erhalten. Das Zuführen der benötigten Energie kann im Rahmen eines Regelvorgangs insbesondere kontinuierlich erfolgen, so dass unter dem "Zuschalten" der zweiten Batterie vorzugsweise kein harter, digitaler Schaltvorgang zu verstehen ist. Der zweite Spannungsregler regelt in einer bevorzugten Ausführungsform eigentlich also den Strom in Abhängigkeit von der gewünschten Spannung an dem Spannungsversorgungsanschluss des Gerätes nach.

Der erfindungsgemäß vorgeschlagene Einsatz des Spannungsreglers ermöglicht es, die zweite Batterie unabhängig von einer Überwachung der Stromverbraucher in dem Gerät oder eines Ladezustands der Batterien automatisch dann zuzuschalten oder zuzuregeln, wenn die durch die erste Batterie zur Verfügung gestellte Versorgungsspannung einen kritischen Wert (Schwellwert) unterschreitet, so dass durch die zweite Batterie genau dieser Schwellwert aufrechterhalten wird. Dieser ist erfindungsgemäß so zu bemessen, dass die in dem Gerät vorgesehenen elektrischen oder elektronischen Einrichtungen bzw. Stromverbraucher mit dieser Versorgungsspannung noch zuverlässig funktionieren.

Die erste Batterie, welche die Grundspannungs- und Grundstromversorgung des Geräts sicherstellt, ist als Niedrigstrom-Batterie, d.h. als Niederstrom-Batterie mit hoher Energiedichte bzw. hohem Energieinhalt, ausgebildet, so dass diese Batterie bei niedriger Grundstromlast die benötigte Versorgungsspannung über einen sehr langen Zeitraum zur Verfügung stellen kann. Im Rahmen einer Verbrauchswerterfassung oder ähnlichen Anforderungen an die erfindungsgemäßen Geräte stellt die erste Batterie damit insbesondere die Stromversorgung eines in dem Gerät vorgesehenen Mikroprozessors sowie der ggf. an das Gerät angeschlossenen Sensorik sicher. Erfindungsgemäß deckt die Niedrigstrom-Batterie in dem batteriebetriebenen Gerät die dauerhaft über die gesamte Lebensdauer bzw. Auslegungszeit der Wartungsintervalle zur Verfügung zu stellende Grundstromlast ab. Dies wird unter Niedrigstrom-Batterie mit hoher Energiedichte verstanden. Die Energiedichte ist also so hoch, dass die für die Grundfunktionen zur Verfügung zu stellende Energie während der gesamten angestrebten Lebensdauer dauerhaft, d.h. unterbrechungslos, zur Verfügung gestellt werden kann.

Die zweite Batterie ist erfindungsgemäß als Hochstrom-Batterie mit verhältnismäßig niedriger Energiedichte bzw. niedrigem Energieinhalt ausgebildet, so dass durch diese Batterie ein insbesondere zeitweise benötigter, hoher Strombedarf bspw. in Form von Strompulsen abgedeckt werden kann. Dieser hohe Strombedarf wird bei Verbrauchserfassungsgeräten oder dgl. Geräten, wie Melde- oder Messgeräten, insbesondere für die darin vorgesehenen Kommunikationseinrichtungen beim Senden und/oder Empfangen von Daten benötigt. Erfindungsgemäß deckt die Hochstrom-Batterie mit verhältnismäßig niedriger Energiedichte bzw. niedrigem Energieinhalt in dem batteriebetriebenen Gerät die über die gesamte Lebensdauer nur zeitweilig, insbesondere pulsartig, benötigte Stromlast ab, deren Amplitude die Amplitude der Grundstromlast übersteigt. Dies wird unter Hochstrombatterie mit verhältnismäßig niedriger Energiedichte verstanden. Die Energiedichte ist also so niedrig, dass die nur zeitweilig benötigte Stromlast, bspw. bei dem Aussenden von Funkbotschaften durch einen Funksender, nicht dauerhaft zur Verfügung gestellt werden könnte, sondern vorzugsweise wiederholt und gerade für die benötigte Zeitdauer.

Erfindungsgemäß wird somit also die Kombination einer Niedrigstrom-Batterie mit einer Hochstrom-Batterie vorgeschlagen, um durch optimale Anpassung an die jeweilige Last eine hohe Einsatzdauer zu erreichen, ohne dass die in dem Gerät herrschende Stromlast überwacht werden muss. Die als Hochstrom-Batterie zugeschaltete zweite Batterie schaltet sich durch den erfindungsgemäß vorgesehenen zweiten Spannungsregler automatisch zu, wenn ein entsprechender Strombedarf in dem batteriebetriebenen Gerät herrscht bzw. entsteht. Dies zeigt sich dadurch, dass die Versorgungsspannung der Niedrigstrom-Batterie, die den zeitweilig benötigten Strom (Strompuls) nicht zur Verfügung stellen kann, einbricht. In diesem Fall schaltet sich automatisch die Hochstrom-Batterie parallel, um eine schädliche Entladung der Niedrigstrom-Batterie zu vermeiden. Typischer Weise liegt die durch die Parallelschaltung der beiden Batterien zur Verfügung gestellte Spannung am Spannungsversorgungsanschluss des Geräts unter der durch die Niedrigstrom-Batterie zur Verfügung gestellten Spannung. Sobald der erhöhte Strombedarf nicht mehr besteht, kann die erste Batterie (Niedrigstrom-Batterie) die Versorgungsspannung wieder alleine zur Verfügung stellen. Dann steigt die durch die erste Batterie abgegebene Versorgungsspannung wieder an und die zweite Batterie schaltet automatisch ab. Die zweite Batterie (Hochstrom-Batterie) wird erfindungsgemäß also nur zeitweilig bei einem erhöhten Strombedarf zugeschaltet, um eine zu starke Entladung der ersten Batterie bereits im Vorfeld zu verhindern. Dies wird besonders zuverlässig dadurch erreicht, dass erfindungsgemäß Batterien unterschiedlichen Typs, d.h. eine Niedrigstrom-Batterie und eine Hochstrom-Batterie, miteinander kombiniert werden.

Außerdem wird die insgesamt durch die beiden Batterien zur Verfügung gestellte Batterieenergie optimal ausgenutzt, da im Falle der Entleerung einer der beiden Batterien (d.h. der ersten Batterie oder der zweiten Batterie) erfindungsgemäß automatisch die jeweils andere Batterie als alleinige Spannungs- und Stromversorgung zur Verfügung steht, bis auch diese soweit entladen ist, dass ein ordnungsgemäßer Betrieb nicht mehr möglich ist. Erst dann müssen beide Batterien gleichzeitig getauscht werden. Durch die vorgeschlagene Kombination der ersten und der zweiten Batterien werden daher Lastspitzen besonders effektiv abgefangen und der Wartungsaufwand reduziert.

Erfindungsgemäß können die erste Batterie, d.h. die Niedrigstrom-Batterie, und die zweite Batterie, d.h. die Hochstrom-Batterie, unterschiedliche Nennspannungen U1 und U2 aufweisen, wobei die Spannung (Nennspannung) der zweiten Batterie vorzugsweise niedriger sein kann als die Spannung (Nennspannung) der ersten Batterie. Dies ist erfindungsgemäß ohne weiteres möglich, weil die durch die zweite Batterie zur Verfügung gestellte Versorgungsspannung am Spannungsversorgungsanschluss ohnehin durch einen Spannungsregler auf einen gewünschten Spannungswert einstellbar ist bzw. eingestellt wird. Im Stand der Technik ist es nur üblich, gleiche Batterietypen vorzugsweise gleicher Nennspannung parallel zu schalten, um schädliche Einflüsse durch unterschiedliches Verhalten der Batterien zu vermeiden. Dies ist erfindungsgemäß nicht mehr nötig.

Gemäß einer bevorzugten Ausgestaltung des vorgeschlagenen Verfahrens kann der der zweiten Batterie zugeordnete zweite Spannungsregler als Aufwärtsregler nur dann Strom liefern, wenn die an seinem Ausgang anliegende Spannung den vorgegebenen Schwellwert unterschreitet. Ferner sperrt dessen Endstufe den Ausgang des Spannungsreglers, wenn die an seinem Ausgang anliegende Spannung größer als der vorgegebene Schwellwert ist. Durch einen derartigen Spannungsregler wird auf einfache Weise eine Regelung auf den vorgegebenen Schwellwert erreicht und eine Entladung der zweiten Batterie verhindert, wenn die an dem Ausgang des Spannungsreglers anliegende Spannung größer ist als der Schwellwert und/oder die Leerlaufspannung der zweiten Batterie.

Optional kann gemäß einer bevorzugten Ausführungsform des vorgeschlagenen Verfahrens die von der ersten Batterie abgegebene Versorgungsspannung in einem der ersten Batterie zugeordneten, nachfolgend auch als ersten Spannungsregler bezeichneten Spannungsregler auf einen Sollwert geregelt werden, der vorzugsweise größer ist als der vorgegebene Schwellwert, bei welchem der vorbeschriebene Spannungsregler Strom liefert. In dieser Ausgestaltung ergibt sich das automatische Zuschalten der zweiten Batterie ohne jeglichen weiteren Regelungs- oder Steuerbedarf bei einer stabilisierten Spannungsversorgung sehr punktgenau, d.h. der Zuschaltzeitpunkt der zweiten Batterie ergibt sich zu einem sehr genau definierten Zeitpunkt. Dies ist bspw. bei einer über Spannungsteiler mittels fest vorgegebene Widerständen geregelten Spannung nicht der Fall, da der Schaltzeitpunkt dann auch von der an dem Spannungsteiler zur Verfügung gestellten Versorgungsspannung der ersten Batterie abhängt.

Zusätzlich oder alternativ kann die an dem Spannungsversorgungsanschluss des Gerätes anliegende Spannung durch einen dem Spannungsversorgungsanschluss zugeordneten, nachfolgend auch als dritten Spannungsregler bezeichneten Spannungsregler auf eine vorgegebene Gerätespannung geregelt werden, die für die innerhalb des Geräts vorgesehenen elektrischen oder elektronischen Einrichtungen bzw. Verbraucher eine geregelte Versorgungsspannung für die Geräteschaltungen an einem Versorgungsspannungsanschluss zur Verfügung stellt. Dies ist insbesondere dann vorteilhaft, wenn elektrische Verbraucher in der Geräteschaltung des Geräts nur geringe Toleranzwerte für eine Eingangs-Versorgungsspannung aufweisen.

In Abhängigkeit von der Empfindlichkeit der in dem Gerät vorgesehenen elektrischen Verbraucher ist es auch möglich, in die Spannungsregler, insbesondere den dritten Spannungsregler, eine Sicherung einzubauen, welche die Spannungsversorgung der Geräteschaltung bei dem Auftreten einer Überspannung, beispielsweise in Form von Spannungsspitzen, deaktiviert, um die in dem Gerät vorgesehenen elektrischen Verbraucher vor Beschädigungen zu schützen. Gemäß einer weiteren Ausgestaltung des vorliegenden Verfahrens können der erste und/oder zweite Spannungsregler durch einen Mikroprozessor an- oder abgeschaltet werden, bspw. wenn durch den Mikroprozessor bspw. an einem entsprechenden Porteingang vorgegebene Vergleichsspannungen detektiert werden oder wenn ein Schaltungsbestandteil des batteriebetriebenen Geräts einen hohen Strombedarf hat. Dies kann bspw. dadurch erfolgen, dass ein in dem Gerät vorgesehener und durch die ersten und zweiten Batterien mit Spannung versorgter Mikroprozessor den schaltbaren Spannungsregler über entsprechende Leistungsausgänge mit Betriebsspannung versorgt und diese unter vorgegebenen Bedingungen schaltet, d.h. an- oder abschaltet. Ebenso kann die Spannungsversorgung durch ein von dem Mikroprozessor betätigtes Schaltelement unterbrochen werden. Diese Varianten können bspw. eingesetzt werden, wenn der Spannungsregler nicht über eine Steuerspannung ein- oder ausgeschaltet werden kann. Eine weitere Möglichkeit zum Schalten des Spannungsreglers liegt in dem Ausgeben einer Steuerspannung von einem Port des Mikroprozessors an einen Steuereingang des Spannungsreglers. Das An- oder Abschalten kann insbesondere automatisch durch Abgriff der an dem Spannungsversorgungsanschluss des Geräts anliegenden Spannung ausgelöst werden, die in dem Mikroprozessor an entsprechenden Eingängen vorzugsweise direkt diskriminiert werden kann.

Dies ist bei dem zweiten Spannungsregler bspw. sinnvoll, solange die durch die erste Batterie zur Verfügung gestellte Versorgungsspannung oberhalb eines definierten Niveaus liegt, bei dem die zweite Batterie nicht zugeschaltet wird. Dann kann die Energie zur Versorgung der elektronischen Bauteile des zweiten Spannungsreglers gespart werden.

Sofern erfindungsgemäß ein erster Spannungsregler vorgesehen ist, kann der der ersten Batterie zugeordnete erste Spannungsregler erfindungsgemäß auch abgeschaltet werden, wenn der durch diesen ersten Spannungsregler gelieferte Versorgungsstrom und/oder die durch diesen ersten Spannungsregler gelieferte Versorgungsspannung unter einen vorgebbaren Schwellwert sinkt oder null ist und/oder wenn der der zweiten Batterie zugeordnete zweite Spannungsregler angeschaltet wird. Dieses Abschalten kann, wie zuvor allgemein beschrieben, bspw. durch einen geeigneten Schalter oder durch Deaktivieren der Versorgungsspannung des ersten Spannungsreglers erfolgen, der vorzugsweise derart aufgebaut ist, dass er im ausgeschalteten Zustand und/oder bei deaktivierter Versorgungsspannung die erste Batterie von dem restlichen Stromkreis trennt. Durch Abschalten des ersten Spannungsreglers wird der ersten Batterie gezielt die Möglichkeit gegeben, sich nach einer Überlastung zu erholen und ihr Nennspannungsniveau schnell wieder zu erreichen. Außerdem kann die erste Batterie durch Abschalten des ersten Spannungsreglers vor einer unerwünschten Aufladung geschützt werden, was alternativ auch durch den Einsatz geeigneter Dioden sichergestellt werden kann.

Die vorliegende Erfindung betrifft auch eine Vorrichtung zur automatischen Spannungsstützung eines mittels Batterie oder Akkumulator betriebenen, d.h. batteriebetriebenen, Geräts mit einer ersten Batterie, die an einen Spannungsversorgungsanschluss des Geräts angeschlossen ist. Entsprechend den Merkmalen des Anspruchs 8 ist eine zweite Batterie an den Eingang eines der zweiten Batterie zugeordneten zweiten Spannungsreglers angeschlossen, dessen Ausgang parallel zu der ersten Batterie an dem Spannungsversorgungsanschluss des Geräts angeschlossen ist. Der Ausgang des Spannungsreglers ist erfindungsgemäß in Abhängigkeit von der an dem Spannungsversorgungsanschluss anliegenden Spannung schaltbar, insbesondere regelbar, ausgebildet, insbesondere derart, dass der Ausgang des Spannungsreglers gesperrt ist, wenn die an dem Spannungsversorgungsanschluss anliegende Spannung größer ist als ein vorgegebener Schwellwert. Der Ausgang dieses zweiten Spannungsreglers wird also erst geschaltet oder geregelt, wenn die an dem Spannungsversorgungsanschluss anliegende Spannung kleiner ist als der vorgegebene Schwellwert. Vorzugsweise ist der zweite Spannungsregler zur Regelung auf genau diesen oder einen anderen Schwellwert eingerichtet. Dazu liefert der zweite Spannungsregler von der zweiten Batterie gerade so viel Strom, dass bei dem seitens des Gerätes temporär geforderten erhöhten Betriebsstroms die an dem Versorgungsanschluss anliegende Spannung dem vorgegebenen Schwellwert entspricht. Hierdurch ist die vorgeschlagene Vorrichtung zur automatischen Spannungsstützung also gerade zur Durchführung des vorbeschriebenen Verfahrens eingerichtet. Erfindungsgemäß sind die erste Batterie eine Niederstrom-Batterie mit hoher Energiedichte und die zweite Batterie eine Hochstrom-Batterie mit niedriger Energiedichte in dem vorbeschriebenen Sinne. Die erfindungsgemäße Vorrichtung ist bspw. durch einen entsprechend eingerichteten Mikroprozessor zur Durchführung des vorbeschriebenen Verfahrens oder Teilen hiervon eingerichtet.

In Weiterbildung der vorliegenden Erfindung kann der der zweiten Batterie zugeordnete zweite Spannungsregler ein Linealregler sein mit einem p-Kanal-MOS-FET, nachfolgend auch nur MOS-FET, als Endstufe, wobei eine durch den p-Kanal-MOS-FET zwangsläufig mitgebildete Diodenstrecke zwischen dem Eingang des Spannungsreglers und dem Ausgang des Spannungsreglers vorzugsweise derart in Sperrrichtung geschaltet ist, dass in der vorbeschriebenen Weise die zweite Batterie weder geladen noch entladen wird. Dies ist der Fall, solange die an dem Spannungsversorgungsanschluss des Geräts anliegende Spannung größer ist als die Spannung der zweiten Batterie und der Leckstrom der Diodenstrecke hinreichend klein ist. Insofern ist ein MOS-FET mit geringem Leckstrom der zwangsläufig mitgebildeten Diodenstrecke zu bevorzugen.

Zusätzlich kann die erste Batterie an den Eingang eines der ersten Batterie zugeordneten ersten Spannungsreglers und der Ausgang des ersten Spannungsreglers an den Spannungsversorgungsanschluss des Geräts angeschlossen sein, um auch die von der ersten Batterie abgegebene Versorgungsspannung auf einen vorgegebenen Wert zu regeln. Der erste Spannungsregler kann auch digital bspw. mittels eines mechanischen oder elektronischen Schalters an- und abschaltbar ausgebildet sein.

Alternativ oder zusätzlich kann der Spannungsversorgungsanschluss des Geräts an den Eingang eines dem Spannungsversorgungsanschluss zugeordneten dritten Spannungsreglers und der Ausgang des dritten Spannungsreglers an eine Geräteschaltung respektive einen geräteinternen Anschluss zur Energieversorgung, insbesondere für einen Mikroprozessor, angeschlossen sein, so dass die in dem Gerät vorgesehenen elektrischen oder elektronischen Verbraucher mit einer konstanten Versorgungsspannung versorgt werden können, wenn diese keine Toleranz bezüglich ihrer Eingangsspannung haben. Die Spannungsregler können ferner Sicherungen aufweisen, die bei Überspannung abschalten und die Spannungsversorgung trennen, um in dem Gerät angeordnete elektrische oder elektronische Verbraucher vor Beschädigungen zu schützen.

Ferner kann ein Spannungsregler, insbesondere der erste, zweite und/oder dritte Spannungsregler, durch einen Mikroprozessor des Geräts schaltbar sein, wobei der Mikroprozessor insbesondere dazu eingerichtet ist, den ersten Spannungsregler und/oder den zweiten Spannungsregler in Abhängigkeit von durch den Mikroprozessor diskriminierten Vergleichsspannungen oder in Abhängigkeit des erforderlichen Stromverbrauchs von Schaltungsbestandteilen des Geräts, bspw. einem Messschaltkreis oder einem Kommunikationsschaltkreis, an- oder abzuschalten. Auch hierdurch lässt sich die erfindungsgemäß automatische Zuschaltung der zweiten Batterie auf einfache Weise verwirklichen, wie im Zusammenhang mit dem vorbeschriebenen Verfahren bereits erläutert.

Um die durch die erste Batterie zur Verfügung gestellte Ladungsmenge zu vergrößern, kann zwischen der ersten Batterie und dem der ersten Batterie zugeordneten ersten Spannungsregler eine Pufferschaltung, beispielsweise ein Kondensator, angeordnet sein. Diese federt eine plötzlich auftretende hohe Stromlast der ersten Batterie bei der Einschaltung von Spannungspulsen ab und fördert dadurch die Lebensdauer der ersten Batterie.

Weitere Vorteile, Merkmale und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen:
- Fig. 1: Batterie-Spannungskennlinien über die Zeit bei einem niedrigen Dauerstrom im µA-Bereich;
- Fig. 2: Batterie-Spannungskennlinien über die Zeit bei einem hohen Dauerstrom im A-Bereich;
- Fig. 3: Batterie-Spannungskennlinien im Pulsbetrieb mit Strompulsen im mittleren Spannungsbereich (mA-Bereich);
- Fig. 4: Batterie-Spannungskennlinien einer Niedrigstrom-Batterie über die Zeit bei niedrigem Dauerstrom mit zusätzlichen Strompulsen gemäß Fig. 3;
- Fig. 5: eine erfindungsgemäße Vorrichtung zur automatischen Spannungsstützung eines batteriebetriebenen Geräts gemäß einer ersten Ausführungsform;
- Fig. 6: eine erfindungsgemäße Vorrichtung zur automatischen Spannungsstützung eines batteriebetriebenen Geräts gemäß einer zweiten Ausführungsform;
- Fig. 7: eine erfindungsgemäße Vorrichtung zur automatischen Spannungsstützung eines batteriebetriebenen Geräts gemäß einer dritten Ausführungsform;
- Fig. 8: Spannungs- und Stromkennlinien der ersten und zweiten Batterie gemäß der vorliegenden Erfindung;
- Fig. 9: eine Batteriespannungs-Kennlinie über die Zeit der ersten Batterie bei Anwendung der vorliegenden Erfindung im Vergleich zu einer herkömmlichen Spannungs- und Stromversorgung und
- Fig. 10: das schematische Schaltbild eines als Spannungsregler der erfindungsgemäßen Vorrichtung einsetzbaren Spannungsreglers.

Die Fig. 1 bis 4 zeigen Betriebskennlinien und das Verhalten typischer Niedrigstrom-Batterien 1 bzw. Hochstrom-Batterien 2. Diese wurden eingangs bereits erläutert. Auf diese Beschreibung wird Bezug genommen.

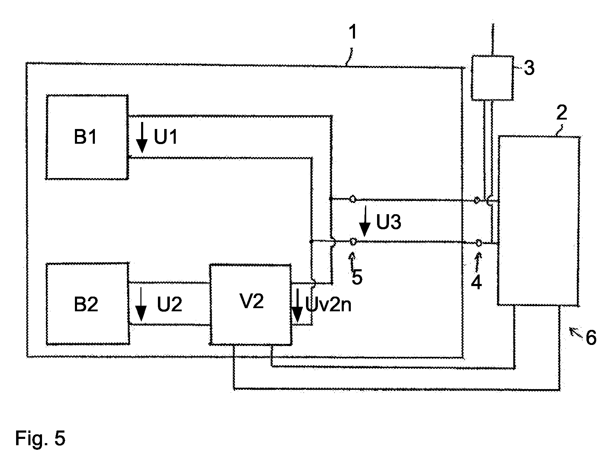

Fig. 5 stellt eine erfindungsgemäße Vorrichtung 1 zur automatischen Spannungsstützung eines batteriebetriebenen Geräts dar. Bei diesem Gerät kann es sich beispielsweise um ein Verbrauchserfassungsgerät, wie einen Heizkostenverteiler, oder einen Datensammler in einem Gebäude-Funknetz handeln. Derartige Geräte erfassen und/oder sammeln Temperaturwerte des Heizkörpers oder andere Verbrauchswerte mittels Sensoren und senden sie an andere Teilnehmer des Gebäude-Funknetzes, beispielsweise andere Datensammler oder sonstige Regeloder Steuergeräte, weiter. Die Erfindung ist aber nicht auf diesen speziellen Anwendungsfall begrenzt.

Derartige Geräte weisen häufig einen Mikroprozessor 2 und einen Sender/ Empfänger 3 als elektrische bzw. elektronische Verbraucher auf, die über einen geräteinternen Anschluss 4 zur Energieversorgung mit der Versorgungsspannung versorgt werden. Der geräteinterne Anschluss 4 zur Energieversorgung stellt den Ausgang der erfindungsgemäßen Vorrichtung 1 zur automatischen Spannungsstützung dar, welche Strom und Spannung für das angeschlossene Gerät aus einer ersten Batterie B1 und einer zweiten Batterie B2 zur Verfügung stellen.

Der Mikroprozessor 2 und der Sender/Empfänger 3 des Geräts weisen einen unterschiedlichen Strombedarf auf. Der Mikroprozessor 2 benötigt einen niedrigen Dauerstrom im µA-Bereich, um die Funktion des Geräts kontinuierlich zu steuern. Der Sender 3 und/oder Empfänger 3 des Geräts wird im Pulsbetrieb betrieben, um durch den Mikroprozessor 2 zur Verfügung gestellte Daten in dem Gebäude-Funknetz oder einem sonstigen Funknetz zu übertragen. Die hierfür erforderliche Hochfrequenz-Versorgung des Senders/Empfängers 3 hat einen vergleichsweise hohen Strompulsbedarf im Bereich von mA, wobei die benötige Energie eines Senders typischer Weise größer ist als die eines Empfängers. Bei einem kombinierten Sender und Empfänger hängt der Energiebedarf von der gerade ausgeführten Tätigkeit ab.

Um diesen unterschiedlichen Strombedarf des Mikroprozessors 2 und des Senders/Empfängers 3 über einen langen Zeitraum zur Verfügung stellen zu können und somit eine lange Lebenszeit des Geräts zu erreichen, sieht die erfindungsgemäße Vorrichtung vor, dass die Spannungs- und Stromversorgung an einem in der Vorrichtung 1 vorgesehenen Spannungsversorgungsanschluss 5 des Geräts durch die erste Batterie zur Verfügung gestellt wird, indem die Pole der ersten Batterie B1 mit dem Spannungsversorgungsanschluss 5 verbunden sind. Dieser ist in der gemäß Fig. 5 dargestellten Ausführungsform an den geräteinternen Anschluss 4 zur Energieversorgung durchgeschleift.

Parallel zu der ersten Batterie B1 ist an den Spannungsversorgungsanschluss 5 über einen als zweiten Spannungsregler bezeichneten Spannungsregler V2 eine zweite Batterie B2 angeschlossen. Dadurch kann die zweite Batterie B2 der ersten Batterie B1 zugeschaltet, insbesondere zugeregelt, werden. An dem Spannungsversorgungsanschluss 5 liegt dann die Spannung U3 an, die aufgrund des Durchschleifens an den Anschluss 4 zur Energieversorgung auch als Versorgungsspannung des Mikroprozessors 2 und des Senders/Empfängers 3, d.h. der Geräteschaltung, in dem batteriebetriebenen Gerät zur Verfügung steht.

Der zweite Spannungsregler V2 regelt auf eine Nennspannung Uv2n, die kleiner ist als die zweite Batteriespannung U2. Erfindungsgemäß ist der zweite Spannungsregler V2 ferner dazu eingerichtet, die zweite Batterie B2 nur dann der ersten Batterie B1 parallel zuzuschalten bzw. "zuzuregeln", wenn die an dem Spannungsversorgungsanschluss 5 des Geräts anliegende Spannung U3 einen vorgegebenen Schwellwert unterschreitet, der vorzugsweise der Nennspannung Uv2n des zweiten Spannungsreglers V2 entspricht.

Im Normbetrieb, d.h. wenn die erste Batterie B1 ausreichend Strom und Spannung für die Versorgung der elektrischen Verbraucher 2, 3 des Gerätes zur Verfügung stellen kann, ist die Versorgungsspannung U1 größer dem vorgegebenen Schwellwert Uv2n, d.h. es gilt U1 > Uv2n. In diesem Fall ist der zweite Spannungsregler V2 nicht aktiv und schaltet die zweite Batterie B2 nicht parallel zu der ersten Batterie B1 auf den Spannungsversorgungsanschluss 5. Dazu sperrt eine Endstufe den Ausgang des Spannungsreglers V2, wenn die an seinem Ausgang anliegende Spannung U3, die in diesem Fall gleich der Spannung U1 ist, größer als der vorgegebene Schwellwert Uv2n ist.

Um den zweiten Spannungsregler V2 zu aktivieren, ist in diesem Ausführungsbeispiel vorgesehen, dass der Mikroprozessor 2 die an seinem Versorgungseingang anliegende Spannung U3 überwacht und bei Unterschreiten des Schwellwerts Uv2n einen Versorgungsspannungsanschluss 6 anschaltet, um den zweiten Spannungsregler V2 zu aktivieren. Alternativ kann der Mikroprozessor 2 auch einen Steueranschluss aktiveren, indem der Mikroprozessor 2 an einem entsprechenden Steuereingang des zweiten Spannungsreglers V2 ein Spannungssignal erzeugt, durch das der Spannungsregler V2 an- bzw. abschaltbar ist.

Dieser zweite Spannungsregler V2 regelt dann die Versorgungsspannung auf den Wert Uv2n ein. Nur im eingeschalteten Zustand regelt der zweite Spannungsregler V2 seine Ausgangsspannung auf die Nennspannung Uv2n ein, so dass die an dem Spannungsversorgungsanschluss 5 anliegende Spannung U3 der Nennspannung Uv2n entspricht. Optional kann zwischen der ersten Batterie B1 und dem Spannungsversorgungsanschluss 5 ein bspw. auch durch den Mikroprozessor 2 schaltbarer, in Fig. 5 nicht dargestellter Schalter vorgesehen sein, um die Batterie B1 von dem Stromkreis zu trennen, wenn der zweite Spannungsregler V2 aktiviert wird. Dazu kann insbesondere die Zuleitung des Pluspols der Batterie, ggf. zusätzlich auch des Minuspols der Batterie durch den Schalter unterbrochen werden.

Solange die Batterie B1 daher in der Lage ist, den benötigten Strom für die Stromverbraucher 2, 3 des Geräts zur Verfügung zu stellen, ohne dass die erste Batteriespannung U1 unter den Schwellwert Uv2n absinkt, steht die erste Batteriespannung U1 an dem geräteinternen Anschluss 4 zur Energieversorgung zur Verfügung. Erst wenn diese erste Batteriespannung U1 abfällt und ein Spannungsniveau erreicht, bei welchem der reibungslose Betrieb des Mikroprozessors 2 nicht mehr möglich wäre, wird der zweite Spannungsregler V2 automatisch aktiviert und stabilisiert das am Spannungsversorgungsanschluss 5 zur Verfügung stehende Spannungsniveau U3 auf den Schwellwert Uv2n, indem der zusätzliche Strombedarf durch die Batterie B2 zur Verfügung gestellt wird, so dass eine Spannung U3=Uv2n gehalten werden kann.

In diesem Fall kann die Batterie B1 anstelle des vorerwähnten, optionalen Schalters oder auch zusätzlich durch eine in Sperrrichtung gepolte, nicht dargestellte Diode vor einer nicht erwünschten Aufladung geschützt werden. Die Batterie B2 ist durch die abschaltbare Aufwärtsregelung V2 vor einer unerwünschten Batterieladung geschützt, solange die erste Batteriespannung U1 und damit die Spannung U3 größer der Nennspannung Uv2n ist.

Die am Anschluss 4 zur Energieversorgung zur Verfügung stehende Spannung U3 ist in diesem Ausführungsbeispiel jedoch nicht konstant, sondern variiert entsprechend dem Spannungsabfall der ersten Batteriespannung U1 mit Belastung der Batterie B1 und/oder deren Entladungszustand. Dies erfordert elektrische bzw. elektronische Verbraucher 2, 3 in dem batteriebetriebenen Gerät, die eine entsprechende Spannungsbreite als Eingangsspannung vertragen.

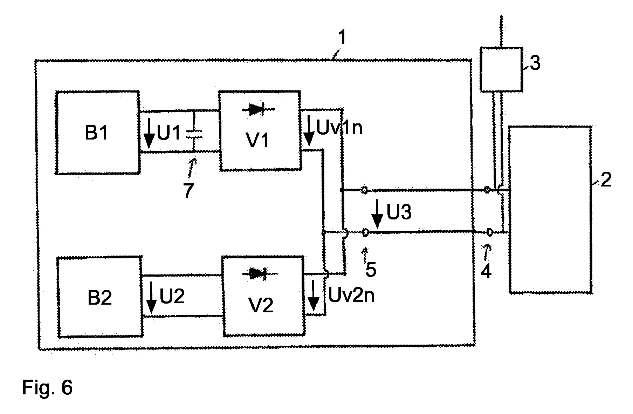

Sofern eine derartige Variation der an dem Anschluss 4 zur Energieversorgung anliegenden Spannung U3 (Betriebsspannung) nicht toleriert werden kann, schlägt eine in Fig. 6 dargestellte zweite Ausführungsform der Erfindung vor, zwischen der ersten Batterie B1 und dem Spannungsversorgungsanschluss 5 einen der ersten Batterie B1 zugeordneten, ersten Spannungsregler V1 vorzusehen, der die erste Batteriespannung U1 auf eine Nennspannung Uv1n regelt, wobei im Normalbetrieb Uv1n > Uv2n gilt, solange die Batterie B1 die Strom- und Spannungsversorgung des Geräts alleine aufrechterhalten kann.

Solange dies der Fall ist, steht an dem Spannungsversorgungsanschluss 5 als geregelte Spannung U3 somit die Nennspannung Uv1n des ersten Spannungsreglers V1 an. Wenn die Batterie B1 aufgrund ihres Entladungszustands oder eines momentanen hohen Stromverbrauchs diese Nennspannung Uv1n nicht halten kann, fällt die Spannung U3 ab, bis die Nennspannung Uv2n des zweiten Spannungsreglers V2 erreicht wird. Bei Unterschreiten dieser Nennspannung Uv2n wird der zweite Spannungsregler V2 in der vorbeschriebenen Weise automatisch aktiv und regelt die Spannung U3 am Spannungsversorgungsanschluss 5 auf seine Nennspannung Uv2n ein.

Sobald sich die Batterie B1 beispielsweise nach einem temporären Strompuls hoher Amplitude wieder erholt hat und die erste Batteriespannung U1 in der Lage ist, die Nennspannung Uv1n des ersten Spannungsreglers V1 wieder zur Verfügung zu stellen, wird der zweite Spannungsregler V2 inaktiv, so dass an dem Spannungsversorgungsanschluss als Spannung U3 wieder die Nennspannung Uv1n zur Verfügung steht. Der zweite Spannungsregler V2 wird genau genommen dann inaktiv, wenn die an dem Spannungsversorgungsanschluss 5 anliegende Spannung U3 den mit der Nennspannung übereinstimmenden Schwellwert Uv2n überschreitet. Bei Bedarf können Schwellwert und Nennspannung Uv2n jedoch auch unterschiedlich gewählt werden.

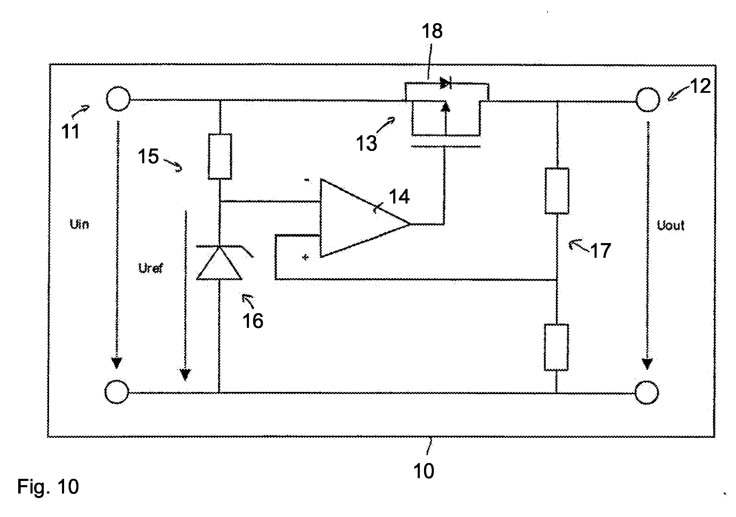

Im Unterschied zu der ersten Ausführungsform gemäß Fig. 5 ist der zweite Spannungsregler V2 als Linearregler mit einem MOS-FET als Endstufe ausgebildet, die zwischen dem Eingang und dem Ausgang des zweiten Spannungsreglers V2 eine wirksame Diodenstrecke ausbildet, welche dann in Sperrrichtung geschaltet ist, wenn die am Ausgang des Spannungsreglers V2 anliegende Spannung U3 den Schwellenwert Uv2n überschreitet. Hierdurch wird ein unerwünschtes Aufladen der Batterie B2 zuverlässig verhindert. Der erste Spannungsregler V1 kann entsprechend ausgebildet sein. Ein Beispiel für eine mögliche Schaltung wird später in Bezug auf Fig. 10 noch näher erläutert.

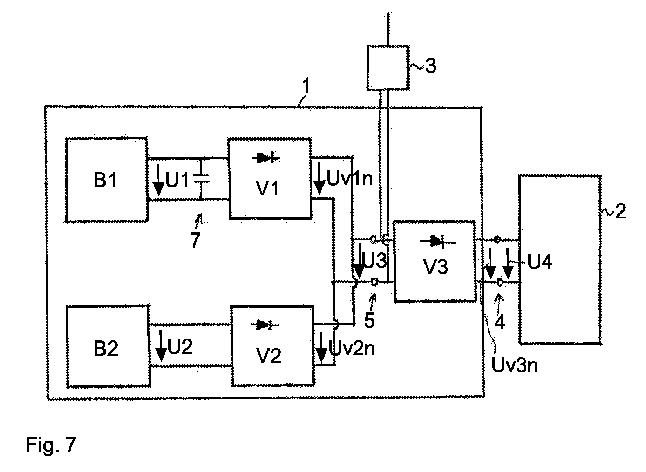

Es versteht sich, dass die verschiedenen Realisierungen der Spannungsregler in den Ausführungsformen gemäß Fig. 5, 6 und der nachfolgend noch zu beschreibenden Fig. 7 miteinander getauscht und vermischt werden können, d.h. jeder Spannungsregler jeder Ausführungsform kann durch eine dieser beiden vorgeschlagenen Varianten realisiert werden.

Als Ergebnis des zusätzlichen ersten Spannungsreglers V1 wird erreicht, dass die Spannung U3 am Spannungsversorgungsanschluss 5, welche auch an dem geräteinternen Anschluss 4 zur Energieversorgung der in dem Gerät vorgesehenen elektrischen und/oder elektronischen Bauteile anliegt, zwischen der Nennspannung Uv1n des ersten Spannungsreglers V1 und der Nennspannung Uv2n des zweiten Spannungsreglers V2 variiert, wobei der Übergang zwischen der Nennspannung Uv1n zu der Nennspannung Uv2n in der Praxis zügig verläuft, wenn nämlich die Batterie B1 den Strombedarf der elektrischen Verbraucher 2, 3 nicht mehr decken kann und die erste Batteriespannung U1 unter die vorgegebene Nennspannung Uv1 n fällt.

In diesem Fall schaltet der erste Spannungsregler V1 durch, so dass die erste Batteriespannung U1 an dem Spannungsversorgungsanschluss 5 ungeregelt zur Verfügung steht. Sobald die erste Batteriespannung U1 die Nennspannung Uv2n des zweiten Spannungsreglers V2 unterschreitet und die erste Batteriespannung U1 soweit abgesunken ist, dass sie keinen nennenswerten Beitrag zu der Stromversorgung der elektrischen Verbraucher 2, 3 leisten kann, wird der erste Spannungsregler V1 vorzugsweise deaktiviert, um ein ungewünschtes Aufladen der Batterie B1 durch die höhere Spannung U3 zu verhindern. Auch dies kann durch eine geeignete wirksame Diodenstrecke innerhalb des ersten Spannungsreglers V1 erreicht werden.

Nach Deaktivierung des ersten Spannungsreglers V1 kann sich die Batterie B1 regenerieren und einen vor dem ersten Spannungsregler V1 vorgesehenen Kondensator 7, der als Pufferschaltung wirkt, aufladen. In diesem Kondensator 7 wird Ladung gespeichert, die bei Strompulsen zusätzlich zur Verfügung steht und dazu führt, dass die Batterie B1 im Falle von Strompulsen mit hoher Amplitude nicht so stark belastet wird. Hierdurch wird die Lebensdauer der ersten Batterie B1 erhöht.

Sofern die Bandbreite der an dem geräteinternen Anschluss 4 zur Energieversorgung zur Verfügung gestellten Spannung U3 immer noch zu groß für einen nachgeschalteten Verbraucher 2, insbesondere einen Mikroprozessor des batteriebetriebenen Geräts, ist, kann zwischen dem Spannungsversorgungsanschluss 5 und dem geräteinternen Anschluss 4 zur Energieversorgung ein dritter, dem Spannungsversorgungsanschluss 5 zugeordneter Spannungsregler V3 vorgesehen werden, der die am Spannungsversorgungsanschluss 5 anliegende Spannung U3 auf eine Nennspannung Uv3n des dritten Spannungsreglers V3 regelt. Diese liegt dann als geregelte Spannung am geräteinternen Anschluss 4 zur Energieversorgung an. Diese dritte Ausführungsform ist in Fig. 7 dargestellt.

In diesem Fall ist es sinnvoll, stromintensive Verbraucher, wie einen Sender/Empfänger 3, zwischen dem Spannungsversorgungsanschluss 5 und dem dritten Spannungsregler V3 anzuschließen, da insbesondere durch gepulste, große Stromverbraucher die Versorgungsspannung beeinflusst wird, so dass es sinnvoll ist, die an dem geräteinternen Anschluss 4 zur Energieversorgung empfindlicher Verbraucher 2 anliegende Spannung U4, welche auf die Nennspannung Uv3n des dritten Spannungsreglers V3 eingeregelt ist, erst nach dem Strom- und Spannungsabgriff solcher stromintensiven Verbraucher 3 zu regeln.

Im Übrigen entspricht die in Fig. 7 dargestellte Ausführungsform der Ausführungsform gemäß Fig. 6, so dass auf eine weitere Beschreibung verzichtet werden kann.

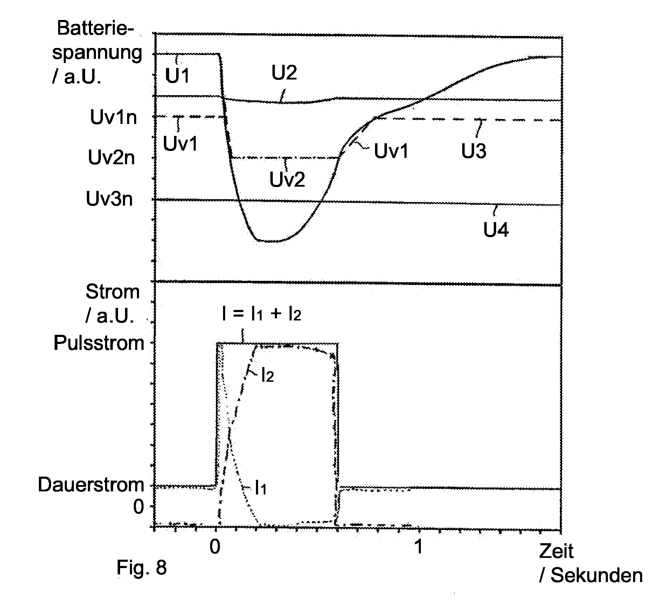

Das durch die vorbeschriebenen Vorrichtungen zur automatischen Spannungsstützung gemäß den Fig. 5, 6 und 7 ausgeführte Verfahren wird nachfolgend anhand von Fig. 8 näher beschrieben, welche das Verhalten der erfindungsgemäßen Vorrichtung in einem typischen batteriebetriebenen Gerät, insbesondere einem Erfassungs- und Kommunikationsgerät in einem Gebäude-Funknetz, darstellt. Sie zeigt korrelierte Strom- und Batteriespannungskennlinien in Abhängigkeit der Zeit, in welcher sowohl ein niedriger Dauerstrom als auch ein vergleichsweise hoher Pulsstrom durch verschiedene Stromverbraucher in dem Gerät abgerufen wird. Der Dauerstrom ist typischerweise einer Steuerung des batteriebetriebenen Geräts, insbesondere einem Mikroprozessor 2 und/oder Messgeräten zugeordnet. Der im Vergleich zu dem Dauerstrom hohe Pulsstrom wird häufig durch eine Funkkommunikationseinrichtung in dem Gerät hervorgerufen.

Die untere Kennlinie zeigt eine durch die Verbraucher 2, 3 des Gerätes abgerufene Stromkennlinie 1, die einen über dem Nullniveau liegenden Dauerstrom kontinuierlich abruft. Zum hier beliebig gewählten Zeitpunkt Null erhöht sich die Stromamplitude für einen Strompuls vorgegebener Länge. Während des Strompulses wird der erhöhte Strom durch Verbraucher 3 abgerufen. Der Gesamtstrom 1 bildet eine typische Kastenform.

Vor dem Starten des Strompulses zum Zeitpunkt Null wird ein niedriger Dauerstrom von der Vorrichtung 1 zur automatischen Spannungsstützung abgerufen. Dieser niedrige Dauerstrom kann vollständig durch die Niedrigstrom-Batterie B1 als Stromanteil 11 zur Verfügung gestellt werden, ohne dass die erste Batterie-spannung U1 einbricht. Der Spannungsregler V2 schaltet die zweite Batterie B2 also nicht parallel.

Diese erste Batteriespannung U1 ist größer oder gleich der Nennspannung Uv1n des ersten Spannungsreglers V1, so dass die durch den ersten Spannungsregler eingestellte Spannung Uv1 der Nennspannung Uv1n entspricht. Der Gesamtstrom I der Verbraucher wird, wie bereits erwähnt, durch den Stromanteil 11 vollständig abgedeckt, der durch die erste Batterie B1 zur Verfügung gestellt wird. Die zweite Batterie B2 liefert keinen Stromanteil 12, d.h. es gilt 12 = 0 A. Der Spannungsregler V2, der nur im Bedarfsfall Strom liefert, aber nicht als Stromsenke funktioniert, ist deaktiviert.

Zu Beginn des Strompulses liefert die erste Batterie B1 zunächst den Gesamtstrom 1, wie an der gepunkteten Linie in dem unteren Diagramm von Fig. 8 zu erkennen ist. Durch die hohe Strombelastung der ersten Batterie B1 zu Beginn des Strompulses bricht die erste Batteriespannung U1 ein und fällt unter die Nennspannung Uv1n des ersten Spannungsreglers. Die erste Batterie B1 kann den erforderlichen Gesamtstrom nun nur noch zum Teil liefern. Sobald die am Ausgang des ersten Spannungsreglers V1 gelieferte Spannung Uv1 auch die Nennspannung und den Schwellwert Uv2n des zweiten Spannungsreglers V2 unterschreitet, wird dieser aktiviert, so dass die zweite Batterie B2 einen steigenden Stromanteil 12 zu dem Gesamtstrom I liefert,.

Aufgrund der nach wie vor hohen Last durch den ersten Stromanteil I1 sinkt die erste Batteriespannung U1 weiter ab, bis die Batterie praktisch keinen Stromanteil 11 mehr zu dem Gesamtstrom des Verbrauchers beitragen kann und entleert ist. Die erste Batteriespannung U1 ist kleiner als U2 und kleiner als Uv2. In diesem Fall wird der erste Spannungsregler V1 deaktiviert und die gesamte Strom- und Spannungsversorgung des Gerätes durch die zweite Batterie B2 und den zweiten Spannungsregler V2 zur Verfügung gestellt.

Da die erste Batterie B1 nicht weiterbelastet wird, erholt sie sich von der pulsartigen, hohen Strombelastung und kehrt langsam zu ihrer Ausgangsspannung zurück und übernimmt wieder Stromanteile 11 an dem Gesamtstrom I = 11 + 12. Dies gilt vor allem gegen oder nach Ende des Strompulses, wenn lediglich der Dauerstrom zur Verfügung gestellt werden muss.

Sobald die Batteriespannung U1 und damit die am Ausgang des ersten Spannungsreglers anliegende Spannung Uv1 den Schwellwert Uv2n des zweiten Spannungsreglers wieder überschreitet, wird dieser aufgrund der erfindungsgemäßen Schaltung deaktiviert, so dass die erste Batterie B1 die Strom- und Spannungsversorgung der Verbraucher 2, 3 des Gerätes wieder vollständig übernimmt. Sobald sich die erste Batteriespannung U1 soweit erholt hat, dass die am Ausgang des ersten Spannungsreglers V1 anliegende Spannung Uv1 die Nennspannung Uv1 n des ersten Spannungsreglers übersteigt, wird dieser erste Spannungsregler V1 aktiv und regelt die Spannung Uv1 auf die Nennspannung Uv1n ein. Die resultierende Spannung U3 an dem Spannungsversorgungsanschluss 5 ist in dem oberen Diagramm der Fig. 8 als gestrichelte (Uv1) bzw. strichpunktierte (Uv2) Linie dargestellt.

Der zwischen dem Spannungsversorgungsanschluss 5 und dem internen Anschluss 4 zur Energieversorgung des Gerätes vorgesehene dritte Spannungsregler V3 regelt die Spannung U3 auf die Versorgungsspannung U4 des Gerätes ein, die der Nennspannung Uv3n des dritten Spannungsreglers entspricht und an dem geräteinternen Anschluss 4 zur Energieversorgung anliegt.

Wenn die erste Batterie B1 soweit entladen ist, dass die am Ausgang des ersten Spannungsreglers V1 anliegende Spannung Uv1 dauerhaft unter die Nennspannung Uv2n sinkt, wird die Gesamtversorgung des Geräts bei der erfindungsgemäßen Vorrichtung zur automatischen Spannungsstützung durch die zweite Batterie B2 übernommen, solange diese ausreichend Energie zur Verfügung hat.

Erst wenn auch diese zweite Batterie B2 vollständig entleert ist, funktioniert das Gerät nicht mehr und löst einen Servicefall aus, bei dem beide Batterien ausgetauscht werden müssen. Durch die vorgeschlagene automatische Umschaltung zwischen der ersten Batterie B1 und der zweiten Batterie B2, bei denen es sich vorzugsweise um eine Niedrigstrom-Batterie (Batterie B1) und eine Hochstrom-Batterie (Batterie B2) handelt, wird eine optimale Ausnutzung der Batterieenergie beider Batterien sowohl im Extremlastfall als auch bei entladener Niedrigstrom-Batterie erreicht. Damit wird eine Versorgung des Gerätes sichergestellt, so lange mindestens nur eine der beiden Batterien B1, B2 nicht soweit entladen ist, dass die Energieversorgung des Geräts noch geleistet werden kann.

Besonders geeignet sind die erfindungsgemäße Vorrichtung und das mit dieser Vorrichtung durchgeführte Verfahren bei Geräten, die im Mittel einen relativ kleinen Stromverbrauch aufweisen, um spezielle Lastfälle aktiv zu stützen, wie sie beispielsweise durch temporäre Funkübertragungen von erfassten oder gesammelten Daten hervorgerufen werden. Mit der Erfindung wird daher eine sehr große Bandbreite unterschiedlich hoher Last-Stromprofile erreicht, d.h. der Strombedarf für einen sehr großen Dynamikbereich abgedeckt. Dies ist mit einer einzigen Batterie nicht erreichbar, da diese entweder als Hochstrom-Batterien oder als Niedrigstrom-Batterien ausgelegt sind und eine zufriedenstellende Kombination beider Batterien in einem Batterietyp technisch noch nicht möglich ist.

Durch Vorsehen von ersten, zweiten und ggf. dritten Spannungsreglern V1, V2 und V3 kann der zulässige Versorgungsspannungsbereich der nachgeschalteten, meist mikrocomputergesteuerten Schaltung und der Batteriezellspannungen ohne großen zusätzlichen Steueraufwand berücksichtigt werden.

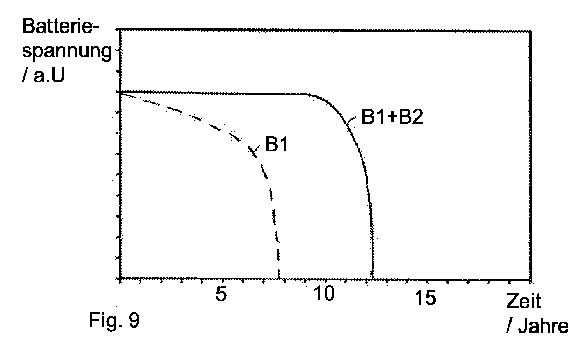

Fig. 9 zeigt die Lebenserwartung der erfindungsgemäßen Vorrichtung 1 zur Spannungsstützung bzw. Spannungsversorgung eines batteriebetriebenen Geräts als durchgezogene Kennlinie mit der erfindungsgemäßen Kombination der Batterien B1 + B2 für einen typischen Anwendungsfall in der Verbrauchswerterfassung bzw. dem Smart Metering, bei dem erfasste Verbrauchswerte neben der Zuordnung der Verbrauchskosten auch zur Steuerung weiterer Raumfunktionen herangezogen wird, was zu einem erhöhten Kommunikationsbedarf führt. Die gestrichelte Linie zeigt dagegen die Lebenserwartung der Stromversorgung im Falle einer ausschließlich zur Spannungs- und Stromversorgung des Geräts verwendeten Niedrigstrom-Batterie B1.

In Fig. 10 ist schließlich eine mögliche Schaltung für einen als Linearregler ausgebildeten Spannungsregler 10 ( entsprechend V1, V2, V3) dargestellt, wie er in den Fig. 6 und 7 verwendet wurde. In der Ausführungsform gemäß Fig. 5 wurde dagegen ein getakteter Schaltregler verwendet, der durch den Mikroprozessor des Gerätes selbst an- und abgeschaltet wird.

Der in Fig. 10 dargestellte Spannungsregler 10 weist einen Eingang 11 auf, an dem die Spannung Uin anliegt. Diese ist im Falle der Spannungsregler V1, V2, V3 jeweils die erste Batteriespannung U1, die zweite Batteriespannung U2 oder die Spannung am Spannungsversorgungsanschluss U3. Am Ausgang 12 des Spannungsreglers 10 liegt die Ausgangsspannung Uout an, die entsprechend den Spannungen Uv1, Uv2 = U3 oder Uv3 = U4 entspricht.

Als Endstufe weist der Spannungsregler 10 einen p-Kanal-MOS-FET 13 auf, der durch eine auf das Gate des p-Kanal-MOS-FET 13 einwirkende Steuerschaltung geschaltet wird. Aufgrund eines meist mit dem Source-Anschluss eines MOS-FET verbundenen internen Bulk-Anschlusses entsteht zwischen dem Source- und dem Drain-Anschluss, die mit dem Eingang 11 und dem Ausgang 12 verbunden sind, eine zusätzliche Diodenstrecke 18, die parallel zu dem eigentlichen Transistor liegt. Diese wird erfindungsgemäß so konfiguriert, dass sie in Sperrrichtung geschaltet ist, wenn an dem Ausgang 12 des Spannungsreglers 10 eine über der vorgegebenen Nennspannung anliegende Spannung anliegt. Hierdurch wird ein unerwünschtes Aufladen der an den Eingang 11 des Spannungsreglers 10 angeschlossenen Batterie verhindert.

Das Ansteuern des Gate-Anschlusses des p-Kanal-MOS-FET 13 wird mittels eines Operationsverstärkers (OPV) 14 erreicht, dessen negativer Eingang an einen ersten Spannungsteiler 15 mit einer Zenerdiode 16 zur Einstellung der Nennspannung, d.h. den Spannungen Uv1n, Uv2n bzw. Uv3n der ersten bis dritten Spannungsregler V1, V2, V3, verwendet wird. Der positive Eingang des Operationsverstärkers 14 ist mit einem zweiten Spannungsteiler 17 verbunden, über den die am Ausgang 12 anliegende Ausgangsspannung Uout des Spannungsreglers 10 abgegriffen wird. Damit schaltet der Komparator-Baustein 14 den p-Kanal-MOS-FET 13 zur Regelung der Ausgangsspannung Uout, wenn die an dem Ausgang anliegende Spannung unter die Referenzspannung Uref sinkt. Falls die Ausgangsspannung Uout größer als die Nennspannung Uv1n, Uv2n bzw. Uv3n ist, ist der als Endstufe wirkende p-Kanal-MOS-FET 13 gesperrt (hochohmig) und aufgrund der Ausrichtung der Diodenstrecke 18 wird die Aufladung der an den Eingang 11 des Spannungsreglers 10 angeschlossenen Batterie verhindert.

Der Spannungsregler 10 arbeitet also kontinuierlich und lässt gerade so viel Strom fließen, dass als Ausgangsspannung Uout die gewünschte Nennspannung Uv1 n, Uv2n bzw. Uv3n erreicht wird.

Durch einen derartigen Linearregler kann, wie auch durch einen getakteten Schaltregler, somit das Aufladen einer der beiden parallel geschalteten Batterien zuverlässig verhindert werden. Optional kann ein Spannungsregler immer ausgeschaltet werden, wenn er sich nicht im Regeleinsatz befindet, um den Energieverbrauch des Gesamtgerätes zu senken.

### Bezugszeichenliste:

- 1: Vorrichtung zur automatischen Spannungsstützung
- 2: Stromverbraucher, Mikroprozessor
- 3: Stromverbraucher, Sender/Empfänger
- 4: Geräteschaltung, Anschluss zur Energieversorgung
- 5: Spannungsversorgungsanschluss
- 6: Versorgungsspannungsanschluss
- 7: Kondensator, Pufferschaltung
- 10: Spannungsregler
- 11: Eingang
- 12: Ausgang
- 13: Endstufe, p-Kanal-MOS-FET
- 14: Operationsverstärker
- 15: erster Spannungsteiler
- 16: Diode
- 17: zweiter Spannungsteiler
- 18: Diodenstrecke

- B1: erste Batterie
- V1: erster Spannungsregler
- U1: erste Batteriespannung
- Uv1 n: Nennspannung des ersten Spannungsreglers
- B2: zweite Batterie
- V2: zweiter Spannungsregler
- U2: zweite Batteriespannung
- Uv2n: Nennspannung des zweiten Spannungsreglers, vorgegebener Schwellwert
- V3: dritter Spannungsregler

- U3: Spannung am Spannungsversorgungsanschluss
- Uv3n: Nennspannung des dritten Spannungsreglers
- U4: geregelte Versorgungsspannung des Geräts
- 1: Gesamtstrom der Verbraucher
- 11: durch erste Batterie zur Verfügung gestellter Stromanteil
- 12: durch zweite Batterie zur Verfügung gestellter Stromanteil

- Uref: Nennspannung des Spannungsreglers
- Uin: Eingangsspannung des Spannungsreglers
- Uout: Ausgangsspannung des Spannungsreglers

## Patentansprüche

1. Verfahren zur automatischen Spannungsstützung eines batteriebetriebenen Geräts, insbesondere eines kombinierten Erfassungs- und Kommunikationsgeräts in einem Gebäude-Funknetz, mit einem zeitabhängig unterschiedlichen Strombedarf, der durch verschiedene Stromverbraucher (2, 3) in dem Gerät hervorgerufen wird, bei dem die Spannungs- und Stromversorgung an einem Spannungsversorgungsanschluss (5) des Geräts durch eine erste Batterie (B1) zur Verfügung gestellt wird und eine zweite Batterie (B2) über einen der zweiten Batterie (B2) zugeordneten zweiten Spannungsregler (V2) an dem Spannungsversorgungsanschluss (5) des Gerätes parallel zugeschaltet wird, wenn die an dem Spannungsversorgungsanschluss (5) des Geräts anliegende Spannung (U3) einen vorgegebenen Schwellwert (Uv2n) unterschreitet, **dadurch gekennzeichnet, dass** als erste Batterie (B1) eine Niedrigstrom-Batterie mit hoher Energiedichte verwendet wird und dass als zweite Batterie (B2) eine Hochstrom-Batterie mit verhältnismäßig niedriger Energiedichte verwendet wird.

2. Verfahren nach Anspruch 1, **dadurch gekennzeichnet, dass** der der zweiten Batterie (B2) zugeordnete zweite Spannungsregler (V2) den Strom in Abhängigkeit von der gewünschten Spannung an dem Spannungsversorgungsanschluss (5) des Gerätes durch kontinuierliches Zuführen der benötigten Energie nachregelt.

3. Verfahren nach Anspruch 1 oder 2, **dadurch gekennzeichnet, dass** der der zweiten Batterie (B2) zugeordnete zweite Spannungsregler (V2) als Aufwärtsregler nur Strom liefert, wenn die an seinem Ausgang (12) anliegende Spannung (U3) den vorgegebenen Schwellwert (Uv2n) unterschreitet, und dass dessen Endstufe (13) den Ausgang des Spannungsreglers (V2) sperrt, wenn die an seinem Ausgang (12) anliegende Spannung (U3) größer als der vorgegebene Schwellwert (Uv2n) ist.

4. Verfahren nach einem der vorhergehenden Ansprüche, **dadurch gekennzeichnet, dass** die von der ersten Batterie (B1) abgegebene Versorgungsspannung (U1) in einem der ersten Batterie (B1) zugeordneten ersten Spannungsregler (V1) auf einen Sollwert (Uv1 n) geregelt wird.

5. Verfahren nach einem der vorhergehenden Ansprüche, **dadurch gekennzeichnet, dass** die an dem Spannungsversorgungsanschluss (5) des Geräts anliegende Spannung (U3) durch einen dem Spannungsversorgungsanschluss (5) zugeordneten Spannungsregler (V3) auf eine vorgegebene Gerätespannung (Uv3n) geregelt wird.

6. Verfahren nach einem der vorhergehenden Ansprüche, **dadurch gekennzeichnet, dass** der erste und/oder zweite Spannungsregler (V1, V2) durch einen Mikroprozessor in Abhängigkeit von durch den Mikroprozessor diskriminierten Vergleichsspannungen oder in Abhängigkeit des erforderlichen Stromverbrauchs von Schaltungsbestandteilen des batteriebetriebenen Geräts an- oder abgeschaltet wird.

7. Verfahren nach Anspruch 6, **dadurch gekennzeichnet, dass** der der ersten Batterie (B1) zugeordnete erste Spannungsregler (V1) abgeschaltet wird, wenn der durch diesen ersten Spannungsregler (V1) gelieferte Versorgungsstrom (11) und/oder die durch diesen ersten Spannungsregler (V1) gelieferte Versorgungsspannung (U1) unter einen vorgegebenen Schwellwert sinkt oder gleich Null ist und/oder wenn der der zweiten Batterie (B2) zugeordnete zweite Spannungsregler (V2) angeschaltet wird.

8. Vorrichtung zur automatischen Spannungsstützung eines batteriebetriebenen Geräts mit einer ersten Batterie (B1), die an einen Spannungsversorgungsanschluss (5) des Geräts angeschlossen ist, und einer zweiten Batterie (B2), die an den Eingang (11) eines der zweiten Batterie zugeordneten zweiten Spannungsreglers (V2) angeschlossen ist, dessen Ausgang (12) parallel an den Spannungsversorgungsanschluss (5) des Geräts angeschlossen ist, wobei der Ausgang (12) des zweiten Spannungsreglers (V2) in Anhängigkeit von der an dem Spannungsversorgungsanschluss (5) anliegenden Spannung (U3) schaltbar ausgebildet ist, **dadurch gekennzeichnet, dass** die erste Batterie (B1) eine Niederstrom-Batterie mit hoher Energiedichte und die zweite Batterie (B2) eine Hochstrom-Batterie mit verhältnismäßig niedriger Energiedichte sind.

9. Vorrichtung nach Anspruch 8, **dadurch gekennzeichnet, dass** der der zweiten Batterie (B2) zugeordnete zweite Spannungsregler (V2) ein Linearregler mit einem p-Kanal-MOS-FET als Endstufe (13) ist.

10. Vorrichtung nach Anspruch 8 oder 9, **dadurch gekennzeichnet, dass** die erste Batterie (B1) an den Eingang (11) eines der ersten Batterie (B1) zugeordneten ersten Spannungsreglers (V1) und der Ausgangs (12) des ersten Spannungsreglers (V1) an den Spannungsversorgungsanschluss (5) des Geräts angeschlossen ist.

11. Vorrichtung nach einem der Ansprüche 8 bis 10, **dadurch gekennzeichnet, dass** der Spannungsversorgungsanschluss (5) des Geräts an den Eingang (11) eines dem Spannungsversorgungsanschluss (5) zugeordneten dritten Spannungsreglers (V3) und der Ausgang (12) des dritten Spannungsreglers (V3) an eine Geräteschaltung (4) angeschlossen ist.

12. Vorrichtung nach einem der Ansprüche 8 bis 11, **dadurch gekennzeichnet, dass** ein Spannungsregler (V1, V2, V3) durch einen Mikroprozessor (2) des Geräts schaltbar ist.

13. Vorrichtung nach einem der Ansprüche 8 bis 12, **dadurch gekennzeichnet, dass** zwischen der ersten Batterie (B1) und dem der ersten Batterie (B1) zugeordneten ersten Spannungsregler (V1) eine Pufiferschaltung (7) angeordnet ist.
